# EUROPÄISCHE PATENTANMELDUNG

(11) **EP 2 380 967 A1**
(43) Veröffentlichungstag der Anmeldung: **26.10.2011**
(21) Anmeldenummer: 11163165.1
(22) Anmeldetag: 20.04.2011
(51) Int. Cl.: C12C 7/04, C12C 11/06, C12C 12/04

(54) **Brauverfahren**

(30) Priorität: 22.04.2010 EP 10160727
(71) Anmelder: Privat-Brauerei Heinrich Reissdorf GmbH & Co. KG, 50996 Köln (DE)
(72) Erfinder: Hasenkrug, Frank, 50825 Köln (DE); Kautz, Uwe, 51143 Köln (DE)
(74) Vertreter: von Kreisler Selting Werner

(57) **Zusammenfassung**

Verfahren zur Herstellung eines alkoholfreien Getränkes, umfassend folgende Schritte:
a) Bereitstellen von Malz
b) Schroten des Malzes und Zugabe von Wasser mit einer Temperatur von 70 bis 76°C, um Maische zu erhalten
c) Halten der Temperatur im Bereich von 70°C bis 76°C, bis keine Stärke mehr nachweisbar ist
d) Erhitzen auf eine Temperatur von mindestens 78°C
e) Läutern der Maische, um eine Bierwürze zu erhalten
f) Zugabe von Hopfen und Kochen der Bierwürze, um eine Ausschlagwürze zu erhalten
g) Zugabe von Säure vor und/oder nach dem Kochen, um einen pH-Wert von 4,0 bis 4,5 zu erhalten
h) Abkühlen auf eine Temperatur zwischen 15 und 20°C
i) Zugabe von Hefekulturen
j) Abwarten bis der Extraktgehalt um 0,5 - 2 Prozentpunkte gesunken ist
k) Zugabe von Wasser, um ein isotonisches Getränk zu erhalten.

## Beschreibung

Die vorliegende Erfindung betrifft ein Verfahren zur Herstellung eines alkoholfreien Getränkes.

Das Verfahren des Bierbrauens ist seit Jahrtausenden bekannt.

Hierzu werden typischerweise Gerstenkörner vermälzt, d.h. durch Anfeuchten zum Keimen gebracht und dann dieser Keimprozess durch Trocknung gestoppt. Zur Bierherstellung wird das Malz geschrotet, d.h. zerkleinert. Anschließend wird das geschrotete Malz eingemaischt, indem es mit warmem Wasser vermischt wird; in diesem Schritt wird die vorhandene Stärke hydrolysiert und die im Malz vorhandenen Enzyme wandeln die Stärke in Zucker um. Die Maische wird von Feststoffen abgetrennt (geläutert), anschließend wird Hopfen zugesetzt und die dann Bierwürze genannte Mischung gekocht. Nach Abtrennen von unlöslichen Bestandteilen und Abkühlung auf Gärtemperatur wird Hefe zugegeben, wobei der größere Anteil des gebildeten Zuckers in Alkohol umgesetzt wird. Nach einer weiteren Lagerung wird das Bier abfiltriert und abgefüllt.

Es wird zwischen untergärigen und obergärigen Bieren unterschieden. Zur Herstellung von obergärigen Bieren wird obergärige Hefe eingesetzt. Diese schwimmt während der Fermentation nach oben auf, während untergärige Hefe auf den Boden des Gärgefäßes sinkt.

Es sind auch alkoholfreie Biere bekannt, die typischerweise geringe Restalkoholmengen enthalten. Üblicherweise wird zur Herstellung von alkoholfreiem Bier ein normal gebrautes Bier mittels Dialyse, Destillation oder Umkehrosmose vom Alkohol weitgehend befreit.

Dem Fachmann sind Variationen im Brauverfahren grundsätzlich bekannt.

Variationen der oben genannten grundsätzlichen Schritte haben Einfluss auf die Eigenschaften des Bieres, insbesondere den Geschmack und die Haltbarkeit.

J. Chandrasekhar, Ferment 7 (1994), Seiten 241 bis 244 offenbart ein Verfahren, bei dem alkoholarme Biere erhalten werden, indem bei Temperaturen zwischen 65 und 80°C eingemaischt wird und anschließend mit Hilfe des Kältekontaktverfahrens, bevorzugt bei Temperaturen von 0,5°C, fermentiert werden.

Es besteht weiterhin Bedarf nach weiteren Varianten von Bieren mit interessanten, für den Verbraucher wünschenswerten Eigenschaften.

Gelöst wird die Aufgabe durch ein alkoholfreies, isotonisches Bier, das nach einem speziellen Brauverfahren erhältlich ist. Das erfindungsgemäße Verfahren zur Herstellung des alkoholfreien, isotonischen Getränkes umfasst folgende Schritte:
a) Bereitstellen von Malz
b) Schroten des Malzes und Zugabe von Wasser mit einer Temperatur von 70 bis 76°C, um Maische zu erhalten
c) Halten der Temperatur im Bereich von 70°C bis 76°C, bis keine Stärke mehr nachweisbar ist
d) Erhitzen auf eine Temperatur von mindestens 78°C
e) Läutern der Maische, um eine Bierwürze zu erhalten
f) Zugabe von Hopfen und Kochen der Bierwürze, um eine Ausschlagwürze zu erhalten
g) Zugabe von Säure vor und/oder nach dem Kochen, um einen pH-Wert von 4,0 bis 4,5 zu erhalten
h) Abkühlen auf eine Temperatur unter 20°C, bevorzugt zwischen 15 und 20°C
i) Zugabe von Hefekulturen
j) Abwarten bis der Extraktgehalt um 0,5 - 2 Prozentpunkte gesunken ist
k) Zugabe von Wasser, um ein isotonisches Getränk zu erhalten.

Erfindungsgemäß wird wie im Stand der Technik üblich ein Malz, als stärkehaltiges Ausgangsmaterial, bereitgestellt. Stärke enthält als Hauptbestandteile Amylose, ein lineares Kohlenhydrat mit α-1,4-glycosidisch verknüpften D-Glucosemonomeren und Amylopektin, eine verzweigte Struktur, bei der D-Glucosemonomere α-1,4-glycosidisch und α-1,6 glycosidisch verknüpft sind. Malz entsteht durch das Keimen von Getreidekörnern, insbesondere Gerstenkörnern. Beim Keimen bilden sie Amylasen im Korn, insbesondere α- und ß-Amylasen.

α-Amylase spaltet die α-1-4-Glycosidbindung im Stärkemokelül. Die Fragmente sind Dextrine. ß-Amylase spaltet vom Kettenende her jeweils ein Glucosemolekül nach dem anderen ab. α-Amylase zerlegt das Stärkemolekül somit in größere Elemente und β-Amylase setzt Dimere (Maltose) frei.

Durch das Schroten wird das Korn aufgespalten. Es kann nass oder trocken geschrotet werden.

Die Temperatur wird beim Maischen eingestellt. Hierzu wird im Stand der Technik mit warmem oder heißem Wasser gearbeitet, wobei Starttemperaturen zwischen 45°C und 61°C üblich sind. Es ist auch üblich, während des Maischens die Temperatur weiter zu erhöhen.

Erfindungsgemäß wird jedoch bei Temperaturen im Bereich von 70 bis 76°C gemaischt. Die aus dem Malz stammenden Amylasen sind temperaturempfindlich. Bei der erfindungsgemäß eingesetzten Temperatur des Einmaischens ist die β-Amylase bereits inaktiviert, so dass nur die α-Amylase enzymatisch wirken kann. Das verzweigte Molekül Amylopektin kann von α-Amylase nicht vollständig hydrolysiert werden, da die vorhandenen (1,6)-glycosidischen Bindungen nicht gespalten werden können.

Erfindungsgemäß wird die Temperatur in diesem Bereich gehalten, bis keine Stärke mehr nachweisbar ist, und anschließend die Temperatur erhöht, um auch die α-Amylase zu inaktivieren. Der Nachweis der Stärke erfolgt wie im Stand der Technik üblich z.B. mittels der Jodprobe.

Anschließend wird die Maische geläutert, um eine Bierwürze zu erhalten. Auf diesem Wege werden Feststoffe aus dem geschroteten Malz abgetrennt.

Anschließend erfolgt in üblicher Weise die Zugabe von Hopfen und das Kochen der Bierwürze. Das dadurch erhaltene Produkt wird als Ausschlagwürze bezeichnet.

In diesem Prozessschritt erfolgt die Zugabe einer geeigneten Säure, um einen pH-Wert von 4,0 bis 4,5 zu erhalten. Diese Würze wird dann auf unter 20°C abgekühlt.

Eine Abkühlung auf eine Temperatur im Bereich von 15 bis 20°C hat sich besonders bewährt. Im Gegensatz zum Kältekontaktverfahren, bei dem auf sehr niedrige Temperaturen gekühlt wird, ist bei den angegebenen Temperaturen noch ein Hefewachstum möglich.

Nach dem Abkühlen erfolgt die Zugabe von Hefe. Durch die erfindungsgemäß zugesetzte Säure, die niedrige Temperatur und den sehr geringen Anteil von vergärbaren Zuckern findet fast keine Vergärung statt, sondern überwiegend Hefeatmung, d.h. die Hefe wächst unter Verbrauch von Sauerstoff, bildet aber fast keinen Alkohol.

In einigen Verfahren des Standes der Technik ist es üblich, große Mengen Hefen einzusetzen, die beispielsweise einer Säurebehandlung unterzogen wurden. Hierdurch werden Inhaltsstoffe von Hefen freigesetzt, die als Geschmacksstoffe genutzt werden. So beschreibt J. Chandrasekhar, Ferment 7 (1994), Seiten 241 bis 244, die Verwendung von Hefen in einer Menge von 30 Millionen lebenden Zellen/ml. In Anbetracht der zuvor durchgeführten Säurebehandlung ist zusätzlich noch ein relevanter Gehalt an nichtlebenden Zellen vorhanden.

Erfindungsgemäß wird bevorzugt mit geringeren Hefedosierungen gearbeitet; vorzugsweise 15 bis 25 Mio Z/ml, mehr bevorzugt 17 bis 21 Mio Z/ml.Der Extraktgehalt wird beim Bierbrauen über die Messung der Dichte ermittelt. Das Verfahren ist dem Fachmann bekannt.

Erfindungsgemäß findet die Fermentation statt, bis der Extraktgehalt um 0,5 bis 2% Punkte gesunken ist. Bei den angegebenen Bedingungen beträgt die Zeit hierfür üblicherweise 1 bis 12 h.

Der Extraktgehalt liegt dann bevorzugt bei 9 bis 11%.

Nach dem der Extraktgehalt der Würze auf den gewünschten Wert gesunken ist, wird in üblicher Weise die Temperatur bis nahe 0°C abgesenkt, um die Aktivität der Hefe weiter zu reduzieren. Die sich dadurch absetzende Hefe und weitere Trubstoffe werden dann in üblicher Weise entfernt.

Erfindungsgemäß wird dann die Osmolarität der Lösung gemessen und durch Zugabe von Wasser die Isotonie im Getränk eingestellt. Anschließend erfolgt in üblicher Weise gegebenenfalls eine Filtration, Carbonisierung und Abfüllung.

Als isotonisch gilt ein Getränk im Sinne dieser Anmeldung, wenn die Osmolarität im Bereich von 246 bis 334 mOsmol/kg liegt. Durch diesen Verdünnungsschritt entsteht ein Bier mit einem angenehmen Geschmack.

Erfindungsgemäß wird somit ein Getränk erhalten, das als alkoholfrei gilt, das aber zur Erzielung der Alkoholfreiheit keiner physikalisch-chemischen Nachbehandlung beispielsweise durch Dialyse, Destillation oder Ähnlichem bedarf.

Da das erfindungsgemäße Getränk überwiegend längerkettige Zucker enthält, führt es nicht zu einem Anstieg des Blutzuckers, der dann eine Insulinspiegelschwankung bewirkt. Als isotonisches Getränk ist es für Sportler sehr gut geeignet.

Trotz des geänderten Brauverfahrens erhält das Getränk einen typischen Biergeschmack.

Die Erfindung wird durch das nachfolgende Beispiel näher erläutert.

### Beispiel

Es wurden 5000 kg Malz mit 190 hl Wasser bereitgestellt. Anschließend erfolgte die Schrotung des Malz und das Einmaischen bei einer Temperatur von 72°C.

Die Maische verblieb bei einer Temperatur von 72°C, bis mittels Jodtest keine Stärke mehr nachweisbar war (Verzuckerungsrast).

Anschließend erfolgte ein Aufheizen auf 78°C (Abmaischtemperatur) und eine Überführung in den Läuterbottich. Im Läuterbottich betrug die Gesamtmaische 230 hl.

Die Konzentration der Vorderwürze betrug 16% und die Menge 150 hl. Es wurde weiter abgeläutert und mit 160 hl Anschwänzwasser nachgespült. Die Gesamtwürzemenge betrug 310 hl mit einem Extraktgehalt von 11%.

Anschließend erfolgt eine Zugabe von ca. 50 Kg Hopfen in Form von Pellets mit 4,3% α-Säure. Die Bierwürze wurde ca. 45 min gekocht und der pH-Wert auf 4,2 eingestellt. Die Ausschlagwürzmenge betrug 300 hl. Sie wurde ohne Belüftung auf 17°C abgekühlt. Hiervon wurden 280 hl in den Gärtank überführt. Das Anstellen erfolgte bei 17 bis 15°C mit einer Hefemenge von 18 bis 20x10⁶ Z/ml. Die Temperatur wurde für 4 Stunden auf 15°C gehalten.

Anschließend wurde die Temperatur in 12 Stunden auf 8°C abgesenkt. Nachdem der Extraktgehalt um ca. 1% gesunken war, so dass das Jungbier noch einen Extraktgehalt von 10,5% hatte, wurde auf eine Temperatur von 4 bis 2°C gekühlt und regelmäßig Trub abgetrennt.

Die Biermenge im Biertank betrug ca. 260 hl. Das Bier wurde mit 150 hl Wasser verdünnt. Es entstand ein Produkt mit einer berechneten Stammwürze von 7,2%. Der Alkoholgehalt lag unter 0,5 Vol.-%, die Osmolarität bei 280 bis 320 mOsmol/kg.

Trub wurde erneut abgetrennt und das alkoholfreie Bier über eine Zentrifuge und einen Schichtenfilter filtriert. Anschließend erfolgte noch die Einstellung des Kohlensäuregehaltes.

## Patentansprüche

1. Verfahren zur Herstellung eines alkoholfreien Getränkes, umfassend folgende Schritte:
a) Bereitstellen von Malz
b) Schroten des Malzes und Zugabe von Wasser mit einer Temperatur von 70 bis 76°C, um Maische zu erhalten
c) Halten der Temperatur im Bereich von 70°C bis 76°C, bis keine Stärke mehr nachweisbar ist
d) Erhitzen auf eine Temperatur von mindestens 78°C
e) Läutern der Maische, um eine Bierwürze zu erhalten
f) Zugabe von Hopfen und Kochen der Bierwürze, um eine Ausschlagwürze zu erhalten
g) Zugabe von Säure vor und/oder nach dem Kochen, um einen pH-Wert von 4,0 bis 4,5 zu erhalten
h) Abkühlen auf eine Temperatur zwischen 15 und 20°C
i) Zugabe von Hefekulturen
j) Abwarten bis der Extraktgehalt um 0,5 - 2 Prozentpunkte gesunken ist
k) Zugabe von Wasser, um ein isotonisches Getränk zu erhalten.

2. Verfahren nach Anspruch 1, **dadurch gekennzeichnet, dass** die zugegebene Säure aus einer biologisch gesäuerten Vorderwürze stammt.

3. Verfahren nach Anspruch 1 oder 2, **dadurch gekennzeichnet, dass** die Hefe eine obergärige Hefe ist.

4. Verfahren nach einem der Ansprüche 1 bis 3, **dadurch gekennzeichnet, dass** der Extraktgehalt vor der Zugabe der Hefekultur bei 10 bis 12% liegt.

5. Verfahren nach einem der Ansprüche 1 bis 4, **dadurch gekennzeichnet dass** das isotonische Getränk eine Osmolarität von 246 bis 334 mosmol / kg aufweist.

6. Alkoholfreies Getränk erhältlich durch ein Verfahren nach einem der Ansprüche 1 bis 5.
